# DEMANDE DE BREVET EUROPEEN

(11) **EP 4 817 479 A1**
(43) Date de publication de la demande: **07.10.2026**
(21) Numéro de dépôt: 26163856.3
(22) Date de dépôt: 11.03.2026
(51) Int. Cl.: A47J 36/06, A47J 37/12

(54) **APPAREIL DE CUISSON ELECTRIQUE A BAIN DE CUISSON AVEC DISPOSITIF DE COLLECTE DE CONDENSAT**

(30) Priorité: 01.04.2025 FR 2503396
(71) Demandeur: SEB S.A., 69130 Ecully (FR)
(72) Inventeur: RENAUD, David, 69134 Ecully Cedex (FR); SEURAT, Frédéric, 69134 Ecully Cedex (FR); LU, Yongzhu, Shaoxing, 312017 (CN); YANG, Xijie, Shaoxing, 312017 (CN)
(74) Mandataire: SEB Développement

(57) **Abrégé**

L'invention concerne un appareil de cuisson électrique (1) à bain de cuisson comportant un boîtier (2), un couvercle (4) mobile entre une position de fermeture et une position d'ouverte et un dispositif de chauffage configuré pour chauffer le bain de cuisson. L'appareil de cuisson électrique (1) comporte en outre un dispositif de collecte (6) comportant un orifice d'évacuation et une chambre de collecte reliée fluidiquement à l'orifice d'évacuation et pour collecter des condensats provenant d'une chambre de cuisson. L'appareil de cuisson électrique (1) comporte un bac de collecte de condensat et un circuit d'acheminement de condensat configuré pour acheminer les condensats jusqu'au bac de collecte de condensat. L'appareil de cuisson électrique (1) est configuré de telle sorte que, lorsque le couvercle (4) est déplacé dans la position d'ouverture, les condensats collectés par le dispositif de collecte (6) s'écoulent par gravité jusqu'à la chambre de collecte via l'orifice d'évacuation.

## Description

### Domaine technique

La présente invention concerne le domaine technique des appareils électroménagers de cuisson comprenant une cuve de cuisson et un couvercle. Plus particulièrement, la présente invention concerne la récupération des condensats générés lors de l'utilisation d'un appareil de cuisson électrique à bain de cuisson.

### Etat de la technique

Il est connu de l'art antérieur d'utiliser un appareil de cuisson électrique à bain de cuisson comportant :
- un boîtier comportant une cuve de cuisson configurée pour recevoir un bain de cuisson,
- un couvercle mobile autour d'un axe de pivotement entre une position de fermeture dans laquelle le couvercle délimite, avec la cuve de cuisson, une chambre de cuisson et empêche un accès à la chambre de cuisson, et une position d'ouverture dans laquelle le couvercle autorise l'accès à la chambre de cuisson, et
- un dispositif de chauffage configuré pour chauffer le bain de cuisson.

Un tel appareil de cuisson électrique permet à un utilisateur de réaliser la cuisson d'aliments dans un bain de cuisson, tel que de l'huile par exemple, et ceci dans une chambre de cuisson qui est délimitée par le couvercle et par la cuve de cuisson.

Cependant, un tel dispositif présente des inconvénients majeurs, un premier inconvénient étant l'accumulation des condensats, générés lors de la cuisson des aliments dans le bain de cuisson, à l'intérieur de la chambre de cuisson. En particulier, lors de l'ouverture du couvercle par l'utilisateur, des condensats formés sur la face inférieure du couvercle sont susceptibles de retomber dans le bain de cuisson et générer des projections de liquide chaud pouvant provoquer des brulures à l'utilisateur.

Dans le cadre d'une utilisation d'un tel appareil de cuisson électrique, des jus de cuisson provenant des aliments présents dans la cuve de cuisson, s'évaporent lors de la cuisson des aliments avant de se condenser au contact de la paroi inférieure du couvercle, et forment ainsi des condensats. Lesdits condensats, composés majoritairement d'eau, sont susceptibles de retomber dans le bain de cuisson et de générer des projections de liquide chaud pouvant provoquer des brulures à l'utilisateur.

### Résumé de l'invention

Le problème technique à la base de l'invention consiste donc à fournir un appareil de cuisson électrique, conformé pour la cuisson d'aliments dans un bain de cuisson, qui soit de structure simple, compacte et économique, tout en permettant la récupération des condensats générés lors de la cuisson des aliments.

A cet effet, la présente invention concerne un appareil de cuisson électrique à bain de cuisson, tel qu'une friteuse électrique à bain d'huile par exemple, configuré pour la cuisson d'aliment et comportant :
- un boîtier comportant une cuve de cuisson configurée pour recevoir un bain de cuisson ;
- un couvercle comprenant une paroi inférieure, le couvercle étant relié au boîtier par un axe définissant une liaison pivot, la liaison pivot étant configurée de telle sorte que le couvercle peut se déplacer entre une position d'ouverture dans laquelle le couvercle autorise un accès à la cuve de cuisson, et une position de fermeture dans laquelle le couvercle empêche l'accès à la cuve de cuisson et dans laquelle la paroi inférieure du couvercle délimite, avec la cuve de cuisson, une chambre de cuisson ;
- un dispositif de chauffage configuré pour chauffer le bain de cuisson ;
- un dispositif de collecte disposé au moins en partie dans la chambre de cuisson et configuré pour collecter, lorsque le couvercle est dans la position de fermeture, des condensats formés sur la paroi inférieure du couvercle lors de la cuisson des aliments, le dispositif de collecte comprenant au moins un orifice d'évacuation ;
- un bac de collecte de condensat ; et
- un circuit d'acheminement de condensat configuré pour acheminer les condensats depuis l'au moins un orifice d'évacuation jusqu'au bac de collecte de condensat, le circuit d'acheminement de condensat comportant une chambre de collecte reliée fluidiquement à l'au moins un orifice d'évacuation et configurée pour collecter les condensats provenant de l'au moins un orifice d'évacuation, ladite chambre de collecte logeant au moins en partie la liaison pivot , et comportant au moins un orifice de drainage ;
l'appareil de cuisson électrique étant configuré de telle sorte que, lorsque le couvercle est déplacé dans la position d'ouverture, les condensats collectés par le dispositif de collecte s'écoulent par gravité jusqu'à la chambre de collecte via l'au moins un orifice d'évacuation.

Une telle configuration de l'invention permet, lorsque le couvercle est déplacé dans la position d'ouverture, un écoulement gravitaire des condensats, depuis l'au moins un orifice d'évacuation du dispositif de collecte jusqu'au bac de collecte de condensat en transitant par le circuit d'acheminement de condensat. Ainsi, la récupération des condensats lors de l'ouverture du couvercle permet d'éviter que lesdits condensats ne retombent dans le bain de cuisson et ne génèrent des projections de liquide chaud susceptibles de provoquer des brulures à l'utilisateur. En outre, une telle configuration de l'appareil de cuisson électrique permet une vidange aisée des condensats récupérés dans le bac de collecte de condensat après utilisation de l'appareil de cuisson électrique.

L'appareil de cuisson électrique peut en outre présenter une ou plusieurs des caractéristiques suivantes, qui peuvent être prises seules ou en combinaison.

Selon un mode de réalisation de l'invention, le dispositif de collecte comporte un canal de collecte configuré pour s'étendre au moins en partie à l'intérieur de la chambre de cuisson et pour collecter les condensats formés sur la paroi inférieure du couvercle.

Selon un mode de réalisation de l'invention, l'appareil de cuisson électrique est configuré de telle sorte que lorsque le couvercle est dans la position de fermeture, au moins une partie des condensats collectés par le dispositif de collecte s'écoulent par gravité jusqu'à la chambre de collecte.

Selon un mode de réalisation de l'invention, le canal de collecte est solidaire en pivotement avec le couvercle.

Selon un mode de réalisation de l'invention, l'au moins un orifice d'évacuation débouche dans la chambre de collecte.

Selon un mode de réalisation de l'invention, l'appareil de cuisson électrique comporte une fenêtre de visualisation, tel qu'un hublot, prévue sur le couvercle et configurée pour permettre à un utilisateur de visualiser le contenu de la chambre de cuisson lorsque le couvercle est dans la position de fermeture.

Selon un mode de réalisation de l'invention, la fenêtre de visualisation est au moins en partie transparente au rayonnement lumineux.

Selon un mode de réalisation de l'invention, le canal de collecte comporte une portion de collecte configurée pour être située au moins en partie à l'aplomb d'une zone d'écoulement de la fenêtre de visualisation et pour collecter des condensats s'écoulant depuis la fenêtre de visualisation lorsque le couvercle est en position de fermeture, et une portion de guidage configurée pour guider les condensats, collectés par la portion de collecte, à l'extérieur de la chambre de cuisson lorsque le couvercle est déplacé vers la position d'ouverture.

Selon un mode de réalisation de l'invention, le couvercle comporte un support de charnière comportant au moins en partie la liaison pivot configurée pour autoriser un pivotement du couvercle entre la position de fermeture et la position d'ouverture.

Selon un mode de réalisation de l'invention, le support de charnière est configuré pour être amovible par rapport au boîtier, de telle sorte que le couvercle est amovible par rapport au boîtier. Une telle configuration de l'invention permet avantageusement un retrait du couvercle afin de simplifier son nettoyage par exemple.

Selon un mode de réalisation de l'invention, le support de charnière comporte une première partie de fixation, et le boîtier comporte une deuxième partie de fixation configurée pour coopérer par complémentarité de forme avec la première partie de fixation.

Selon un mode de réalisation de l'invention, le circuit d'acheminement de condensat est prévu dans le boîtier, et plus particulièrement dans une partie arrière du boîtier.

Selon un mode de réalisation de l'invention, l'axe de pivotement du couvercle est situé dans une partie arrière du boîtier.

Selon un mode de réalisation de l'invention, l'axe de pivotement est sensiblement horizontal lorsque le boîtier repose sur une surface horizontale.

Selon un mode de réalisation de l'invention, la fenêtre de visualisation, et plus précisément une paroi interne de la fenêtre de visualisation, est sensiblement plane et présente une inclinaison par rapport à l'horizontale, lorsque le couvercle est dans la position de fermeture et que le boîtier repose sur une surface horizontale. Une telle configuration de la fenêtre de visualisation permet avantageusement de maximiser l'écoulement des condensats, formés sur la paroi interne de la fenêtre de visualisation, en direction de la portion de collecte du canal de collecte, et donc de maximiser la collecte desdits condensats par le canal de collecte.

Selon un mode de réalisation de l'invention, la fenêtre de visualisation est inclinée vers le bas et en direction d'une face avant du boîtier. Une telle configuration de l'invention permet à l'utilisateur d'avoir une visibilité accrue du contenu de la chambre de cuisson.

Selon un mode de réalisation de l'invention, la fenêtre de visualisation est inclinée par rapport à l'horizontal selon un angle d'inclinaison supérieur à 5 degrés, avantageusement supérieur à 6 degrés, et par exemple supérieur à 8 degrés, lorsque le couvercle est dans la position de fermeture et que le boîtier repose sur une surface horizontale. Une telle configuration de l'appareil de cuisson électrique assure un écoulement efficace des condensats depuis la fenêtre de visualisation jusqu'à la portion de collecte du canal de collecte, en évitant que les condensats ne forment des gouttes susceptibles de tomber dans le bain de cuisson.

Selon un mode de réalisation de l'invention, la portion de collecte du canal de collecte comporte une ouverture supérieure configurée pour autoriser un écoulement gravitaire des condensats depuis la zone d'écoulement de la fenêtre de visualisation et dans la portion de collecte.

Selon un mode de réalisation de l'invention, la portion de guidage est configurée pour guider des condensats collectés par le canal de collecte jusqu'à l'au moins un orifice d'évacuation.

Selon un mode de réalisation de l'invention, l'au moins un orifice d'évacuation est prévu dans une partie arrière du couvercle.

Selon un mode de réalisation de l'invention, l'au moins un orifice d'évacuation est configuré pour être le point le plus bas du canal de collecte lorsque le couvercle est dans la position d'ouverture.

Selon un mode de réalisation de l'invention, la chambre de collecte est prévue dans le couvercle. En d'autres termes, la chambre de collecte est solidaire en pivotement avec le couvercle.

Selon un mode de réalisation de l'invention, la chambre de collecte est configurée pour loger au moins en partie un arbre de pivotement appartenant à la liaison pivot.

Selon un mode de réalisation de l'invention, la chambre de collecte est prévue dans la partie arrière du boîtier, au niveau de l'axe de pivotement.

Selon un mode de réalisation de l'invention, la chambre de collecte comporte au moins deux parois de support configurées pour supporter en partie l'arbre de pivotement appartenant à la liaison pivot.

Selon un mode de réalisation de l'invention, la chambre de collecte comporte des parois latérales, distinctes des parois de support, et configurées pour supporter en partie l'arbre de pivotement.

Selon un mode de réalisation de l'invention, la chambre de collecte comporte une pluralité de compartiments internes qui sont séparés les uns des autres et qui comprennent chacun au moins un orifice de drainage. Une telle configuration de l'invention permet d'éviter l'accumulation de condensat dans les compartiments internes.

Selon un mode de réalisation de l'invention, chacun des compartiments internes est délimité au moins en partie par l'une des parois de support.

Selon un mode de réalisation de l'invention, le circuit d'acheminement de condensat comporte également une chambre intermédiaire, et l'au moins un orifice de drainage est prévu sur une paroi inférieure de la chambre de collecte et est configuré pour autoriser un écoulement gravitaire des condensats depuis la chambre de collecte jusqu'à la chambre intermédiaire.

Selon un mode de réalisation de l'invention, l'au moins un orifice de drainage est le point le plus bas de la chambre de collecte lorsque le couvercle est dans la position de fermeture.

Selon un mode de réalisation de l'invention, l'au moins un orifice de drainage est configuré pour s'étendre selon un plan sensiblement horizontal lorsque le couvercle est dans la position de fermeture.

Selon un mode de réalisation de l'invention, la chambre de collecte comporte une première paroi de chambre et une deuxième paroi de chambre situées en regard l'une de l'autre et de part et d'autre de l'axe de pivotement du couvercle, la deuxième paroi de chambre étant plus éloignée d'un axe central du couvercle que la première paroi de chambre, l'au moins un orifice de drainage comportant au moins un orifice de drainage distal qui est adjacent à la deuxième paroi de chambre. Une telle configuration de l'invention permet d'éviter la création de volume mort dans la chambre de collecte et ainsi de vidanger l'intégralité des condensats présents dans la chambre de collecte lorsque le couvercle est dans la position d'ouverture.

Selon un mode de réalisation de l'invention, l'appareil de cuisson électrique est configuré de telle sorte que, lors du déplacement du couvercle dans la position d'ouverture, la deuxième paroi de chambre est configurée pour guider au moins une partie des condensats collectés par la chambre de collecte vers l'orifice de drainage distal lorsque le couvercle est déplacé dans la position d'ouverture.

Selon un mode de réalisation de l'invention, l'au moins un orifice de drainage comporte au moins un orifice de drainage proximal situé à proximité de la première paroi de chambre.

Selon un mode de réalisation de l'invention, l'au moins un orifice de drainage distal et l'au moins un orifice de drainage proximal sont prévus respectivement de part et d'autre d'un plan vertical contenant l'arbre de pivotement.

Selon un mode de réalisation de l'invention, l'au moins un orifice de drainage distal est configuré pour s'étendre à une élévation inférieure à celle de l'au moins un orifice de drainage proximal lorsque le couvercle est dans la position d'ouverture.

Selon un mode de réalisation de l'invention, l'au moins un orifice de drainage proximal est prévu du côté, et par exemple à proximité immédiate, de la première paroi de chambre de la chambre de collecte. Une telle configuration de l'invention permet d'éviter l'accumulation de condensat dans la chambre de collecte lorsque le couvercle est dans la position de fermeture en plaçant l'au moins un orifice de drainage proximal dans une zone adjacente à l'au moins un orifice d'évacuation du dispositif de collecte.

Selon un mode de réalisation de l'invention, chaque paroi de support est configurée pour s'étendre sensiblement transversalement à la paroi inférieure de la chambre de collecte.

Selon un mode de réalisation de l'invention, la chambre intermédiaire comprend au moins un orifice de sortie configuré pour autoriser un écoulement des condensats depuis la chambre intermédiaire jusque dans le bac de collecte de condensat.

Selon un mode de réalisation de l'invention, la chambre intermédiaire est prévue dans le boîtier et est configurée pour recevoir des condensats s'écoulant depuis la chambre de collecte.

Selon un mode de réalisation de l'invention, la chambre intermédiaire est prévue dans la partie arrière du boîtier.

Selon un mode de réalisation de l'invention, le support de charnière est monté dans la chambre intermédiaire et délimite en partie le circuit d'acheminement de condensat.

Selon un mode de réalisation de l'invention, l'au moins un orifice de sortie est configuré pour s'étendre selon un plan sensiblement horizontal lorsque le boîtier repose sur une surface horizontale.

Selon un mode de réalisation de l'invention, l'au moins un orifice de drainage est configuré pour s'étendre sensiblement à l'aplomb de la chambre intermédiaire et est configuré pour autoriser un écoulement des condensats depuis la chambre de collecte vers la chambre intermédiaire.

Selon un mode de réalisation de l'invention, l'au moins un orifice de sortie est configuré pour s'étendre sensiblement à l'aplomb du bac de collecte de condensat et est configuré pour autoriser un écoulement des condensats depuis la chambre intermédiaire vers le bac de collecte de condensat.

Selon un mode de réalisation de l'invention, le bac de collecte de condensat est monté sur le boîtier.

Selon un mode de réalisation de l'invention, le bac de collecte de condensat est amovible par rapport au boîtier.

Selon un mode de réalisation de l'invention, le bac de collecte de condensat comporte un bord périphérique supérieur délimitant une ouverture supérieure, l'au moins un orifice de sortie de la chambre intermédiaire étant configuré pour être situé en regard de l'ouverture supérieure du bac de collecte de condensat. En d'autres termes, l'au moins un orifice de sortie est configuré pour s'étendre à l'aplomb de l'ouverture supérieure du bac de collecte de condensat.

Selon un mode de réalisation de l'invention, la chambre intermédiaire est configurée pour s'étendre au moins en partie à l'aplomb et en dessous de la chambre de collecte.

Selon un mode de réalisation de l'invention, la chambre intermédiaire comporte au moins un orifice de sortie latéral débouchant dans une surface externe du boîtier, le bac de collecte de condensat étant configuré pour collecter d'éventuels condensats s'écoulant par gravité depuis l'au moins un orifice de sortie latéral.

Selon un mode de réalisation de l'invention, le bord périphérique supérieur du bac de collecte de condensat comporte une portion de bord configurée pour être en saillie par rapport à une paroi périphérique du boîtier lorsque le bac de collecte de condensat est dans une configuration d'utilisation. Une telle configuration du bac de collecte de condensat permet avantageusement de collecter les condensats s'écoulant depuis au moins un orifice d'évacuation de vapeur prévu sur le couvercle ou depuis l'au moins un orifice de sortie latéral.

Selon un mode de réalisation de l'invention, le bac de collecte de condensat est configuré pour s'étendre sensiblement à l'aplomb de l'axe de pivotement du couvercle.

Selon un mode de réalisation de l'invention, lorsque le couvercle est dans la position d'ouverture et que le boîtier repose sur une surface horizontale, le couvercle est incliné selon un angle strictement inférieur à 90°, et par exemple strictement inférieur à 80°, par rapport à un axe vertical. Une telle configuration de l'invention permet d'assurer un écoulement des condensats depuis le dispositif de collecte jusqu'au circuit d'acheminement de condensat lorsque le couvercle occupe la position d'ouverture.

Selon un mode de réalisation de l'invention, la portion de guidage est située à une altitude inférieure à celle de la portion de collecte lorsque le couvercle occupe la position de fermeture, de sorte à autoriser un écoulement gravitaire des condensats depuis la portion de collecte jusqu'à la portion de guidage lorsque le couvercle est dans la position de fermeture et que le boîtier repose sur une surface horizontale.

Selon un mode de réalisation de l'invention, le canal de collecte s'étend sensiblement sur le pourtour de la cuve de cuisson lorsque le couvercle est dans la position de fermeture.

Selon un mode de réalisation de l'invention, le canal de collecte est sensiblement annulaire.

Selon un mode de réalisation de l'invention, le canal de collecte est fixé au couvercle, de telle sorte qu'il est solidaire en pivotement avec le couvercle.

Selon un mode de réalisation de l'invention, la portion de guidage forme un conduit de guidage, c'est-à-dire un canal de guidage à section fermée. Une telle configuration de l'invention permet d'éviter que les condensats présents dans le canal de collecte ne s'accumulent et ne débordent de la portion de guidage (et ne retombent dans le bain de cuisson) lorsque le couvercle est déplacé vers la position d'ouverture après un cycle de cuisson par exemple. En effet, lors de l'ouverture du couvercle, les condensats vont, sous l'effet de la gravité, être convoyés simultanément vers le point le plus bas du canal de collecte, ce qui pourrait conduire à un débordement localisé des condensats dans le cas où la portion de guidage présente une ouverture supérieure par exemple.

Selon un mode de réalisation de l'invention, le couvercle comporte un corps de couvercle et une pièce de collecte fixée au corps de couvercle, la pièce de collecte comprenant un canal principal à section ouverte comportant une première partie de canal formant la portion de collecte et une deuxième partie de canal formant en partie la portion de guidage, le corps de couvercle étant configuré pour recouvrir et obturer la deuxième partie de canal de telle sorte que le corps de couvercle et la deuxième portion de canal forment la portion de guidage, et plus particulièrement un canal de guidage à section fermée.

Selon un mode de réalisation de l'invention, le bac de collecte de condensat est prévu dans la partie arrière du boîtier.

Selon un mode de réalisation de l'invention, l'appareil de cuisson électrique comporte un élément d'étanchéité, tel qu'un joint d'étanchéité par exemple, configuré pour s'étendre au moins en partie entre le couvercle et le boîtier lorsque le couvercle est dans la position de fermeture, l'élément d'étanchéité délimitant au moins en partie le canal de collecte.

### Brève description des figures

La présente invention sera bien comprise à l'aide de la description qui suit en référence aux figures annexées, dans lesquelles des signes de références identiques correspondent à des éléments structurellement et / ou fonctionnellement identiques ou similaires.
[Fig 1] est une vue en perspective d'un appareil de cuisson électrique selon un premier mode de réalisation de l'invention et comportant un couvercle dans une position d'ouverture ;
[Fig 2] est une vue en perspective de l'appareil de cuisson électrique de la figure 1 dans lequel le couvercle est dans une position de fermeture ;
[Fig 3] est une vue partielle en perspective, de l'appareil de cuisson électrique de la figure 1 ;
[Fig 4] est une vue partielle en perspective du dessus de l'appareil de cuisson électrique de la figure 1 ;
[Fig 5] est une vue en coupe longitudinale d'une partie avant du couvercle selon le premier mode de réalisation de l'invention ;
[Fig 6] est une vue en coupe longitudinale d'une partie arrière du couvercle selon le premier mode de réalisation de l'invention ;
[Fig 7] est une vue en perspective d'un canal de collecte configuré pour équiper le couvercle de l'appareil de cuisson électrique selon le premier mode de réalisation de l'invention ;
[Fig 8] est une vue partielle en perspective, tronquée selon un premier plan de coupe vertical, d'une partie arrière de l'appareil de cuisson électrique de la figure 1 ;
[Fig 9] est une vue partielle en perspective, tronquée selon un deuxième plan de coupe vertical décalé par rapport au premier plan de coupe vertical, de la partie arrière de l'appareil de cuisson électrique de la figure 1 ;
[Fig 10] est une vue en arrière de l'appareil de cuisson électrique de la figure 1 dans laquelle le couvercle est dans la position de fermeture ;
[Fig 11] est une vue en perspective de la partie arrière de l'appareil de cuisson électrique de la figure 1 dans laquelle le couvercle est dans la position d'ouverture ;
[Fig 12] est une vue en coupe d'un couvercle d'un appareil de cuisson électrique selon un deuxième mode de réalisation de l'invention.

### Description détaillée

Dans le présent document, les termes « avant », « arrière », « supérieur » et « inférieur » sont définis par rapport à une utilisation normale de l'appareil de cuisson électrique durant laquelle le boîtier repose sur une surface horizontale.

A défaut de stipulation contraire, le terme « sensiblement » signifie, dans le présent document, « exactement ou à 10% ou à 10° près ».

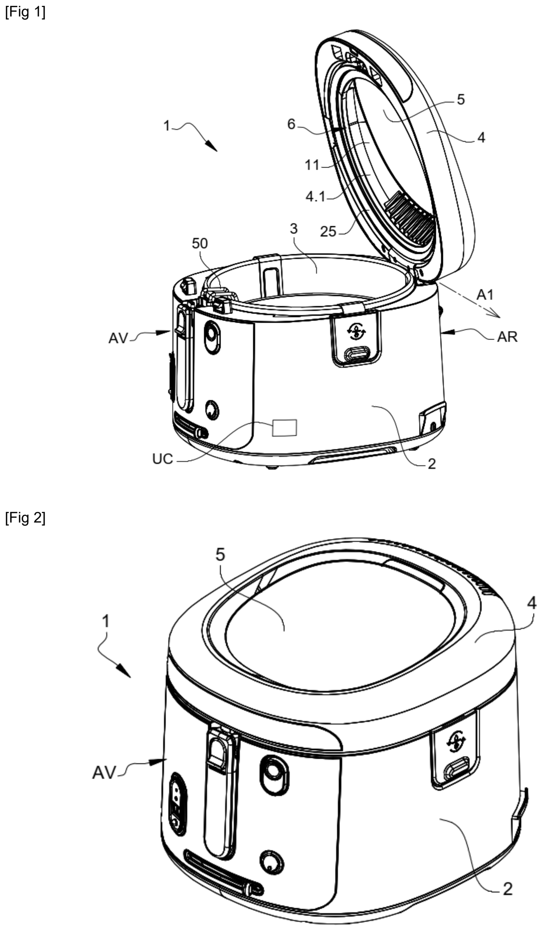

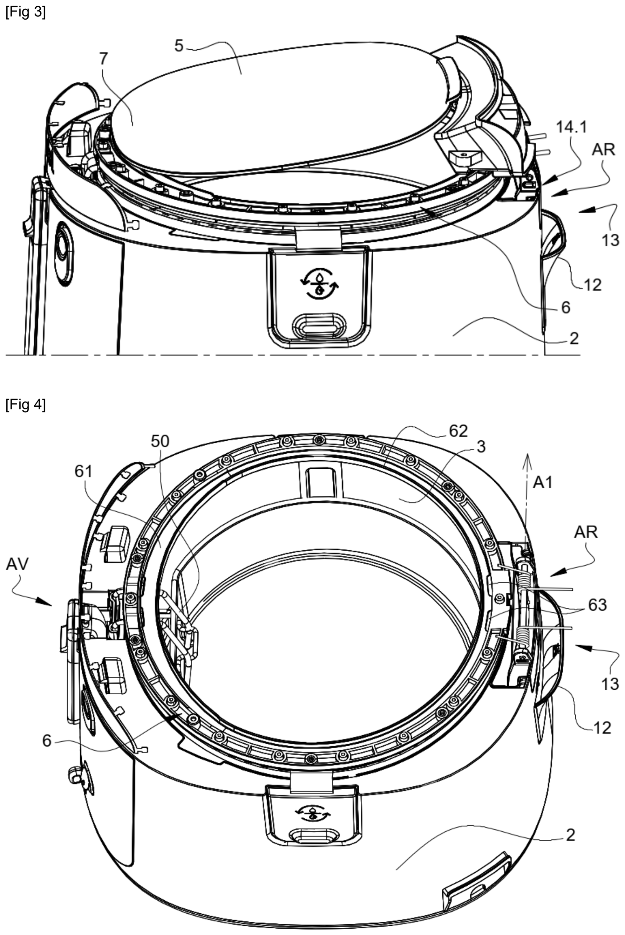

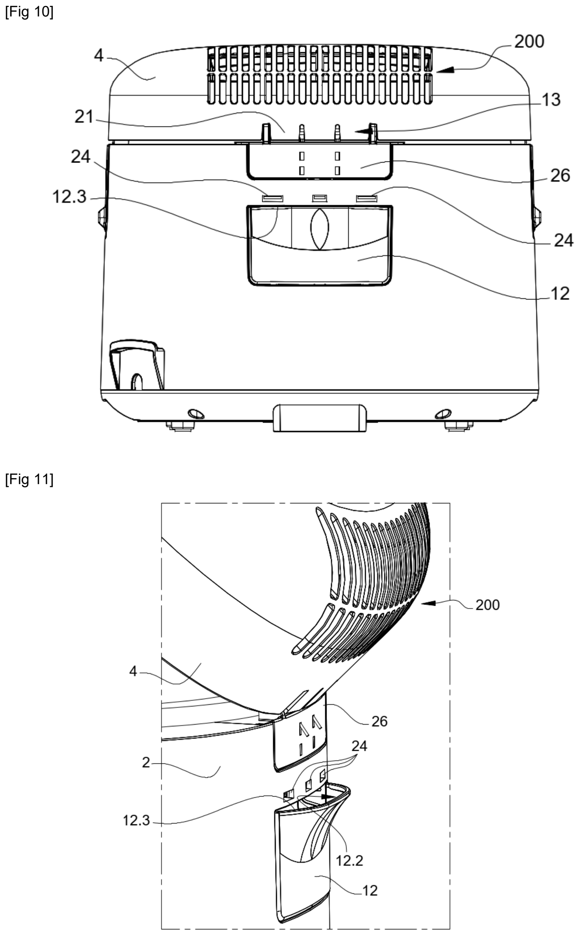

Les figures 1 à 11 représentent tout ou partie d'un appareil de cuisson électrique 1, tel qu'une friteuse électrique à bain d'huile par exemple, configuré pour cuire des aliments et selon un premier mode de réalisation de l'invention. L'appareil de cuisson électrique 1 comprend notamment un boîtier 2 comportant une cuve de cuisson 3 configurée pour recevoir un bain de cuisson, un couvercle 4 mobile entre une position de fermeture et une position d'ouverture, et un dispositif de chauffage 50 (voir figure 4) configuré pour chauffer le bain de cuisson. En outre, l'appareil de cuisson électrique 1 comporte une unité de commande UC prévue dans le boîtier 2 et configurée pour commander le fonctionnement de l'appareil de cuisson électrique 1.

De façon avantageuse, le couvercle 4 comporte une paroi inférieure 4.1 et est monté pivotant par rapport au boîtier 2 autour d'un axe de pivotement A1 entre la position d'ouverture dans laquelle le couvercle 4 autorise un accès à la cuve de cuisson 3, et la position de fermeture dans laquelle le couvercle 4 empêche l'accès à la cuve de cuisson 3 et dans laquelle la paroi inférieure 4.1 du couvercle 4 délimite, avec la cuve de cuisson 3, une chambre de cuisson. Par position d'ouverture du couvercle 4, il est entendu une position dans lequel le couvercle 4 est incliné selon un angle inférieur à 90° par rapport à la verticale lorsque le boîtier 2 repose sur une surface horizontale. Selon le premier mode de réalisation de l'invention représenté sur les figures 1 à 11, l'axe de pivotement A1 est situé dans une partie arrière AR du boîtier 2, et est sensiblement horizontal lorsque le boîtier 2 repose sur une surface horizontale.

L'appareil de cuisson électrique 1 comporte en outre une fenêtre de visualisation 5, telle qu'un hublot, prévue sur le couvercle 4 et configurée pour permettre à un utilisateur de visualiser le contenu de la chambre de cuisson lorsque le couvercle 4 est dans la position de fermeture, et un dispositif de collecte 6 comporte un canal de collecte 60 configuré pour s'étendre au moins en partie à l'intérieur de la chambre de cuisson et pour collecter des condensats formés sur la fenêtre de visualisation 5 et s'écoulant depuis une zone d'écoulement 7 de la fenêtre de visualisation 5. Avantageusement, la zone d'écoulement 7 est située dans une partie avant AV du couvercle 4.

Plus particulièrement, la fenêtre de visualisation 5 est transparente au rayonnement lumineux, et peut par être réalisée en un matériau conforme à une utilisation dans un appareil de cuisson électrique 1 ; ledit matériau pouvant être une matière synthétique transparente tel qu'un polymère de type polycarbonate par exemple, ou une matière minérale transparente tel que du verre, du verre borosilicate, du cristal ou du quartz par exemple.

Selon le premier mode de réalisation de l'invention, la fenêtre de visualisation 5, et plus précisément une paroi interne 8 de la fenêtre de visualisation 5, est sensiblement plane et est inclinée vers le bas et en direction d'une face avant AV du boîtier 2 ; la zone d'écoulement 7 de la fenêtre de visualisation 5 étant la portion périphérique la plus basse de la fenêtre de visualisation 5 lorsque le couvercle 4 est dans la position de fermeture et que le boîtier 2 repose sur une surface horizontale. Avantageusement, la fenêtre de visualisation 5 est inclinée par rapport à l'horizontal selon un angle d'inclinaison supérieur à 5 degrés, avantageusement supérieur à 6 degrés, et par exemple supérieur à 8 degrés, lorsque le couvercle 4 est dans la position de fermeture et que le boîtier 2 repose sur une surface horizontale. Une telle configuration de l'appareil de cuisson électrique 1 permet à l'utilisateur d'avoir une visibilité accrue du contenu de la chambre de cuisson, tout en assurant un écoulement efficace des condensats depuis la fenêtre de visualisation 5 jusqu'au canal de collecte 60, en évitant que les condensats ne tombent par gravité dans le bain de cuisson avant d'atteindre la zone d'écoulement 7.

Le canal de collecte 60, représenté plus spécifiquement sur les figures 3 à 7, est solidaire en pivotement avec le couvercle 4, et comporte une portion de collecte 61 comportant une ouverture supérieure configurée pour être située au moins en partie à l'aplomb de la zone d'écoulement 7 de la fenêtre de visualisation 5 de manière à autoriser un écoulement gravitaire des condensats depuis la zone d'écoulement 7 de la fenêtre de visualisation 5 jusqu'à l'intérieur du volume défini par la portion de collecte 61, lorsque le couvercle 4 est en position de fermeture.

Le canal de collecte 60 comporte en outre une portion de guidage 62 configurée pour guider les condensats, collectés par la portion de collecte 61, à l'extérieur de la chambre de cuisson lorsque le couvercle 4 est déplacé vers la position d'ouverture. Une telle configuration de l'appareil de cuisson électrique 1 permet avantageusement de récupérer les condensats, générés sur la paroi interne 8 de la fenêtre de visualisation 5 lors de la cuisson d'aliments, au niveau de la portion de collecte 61 du canal de collecte 60. Ainsi, les condensats sont récupérés avant qu'ils ne retombent dans le bain de cuisson, ce qui permet de prévenir des projections du liquide à haute température composant le bain de cuisson à l'extérieur du boîtier 2 et potentiellement sur l'utilisateur.

Selon le premier mode de réalisation de l'invention, le canal de collecte 60 est annulaire et s'étend sensiblement sur le pourtour de la cuve de cuisson 3 (voir figure 4) lorsque le couvercle 4 est dans la position de fermeture. La portion de collecte 61 peut par exemple présenter une largeur supérieure à la largeur de la portion de guidage 62 afin de maximiser la récupération des condensats s'écoulant depuis la fenêtre de visualisation 5.

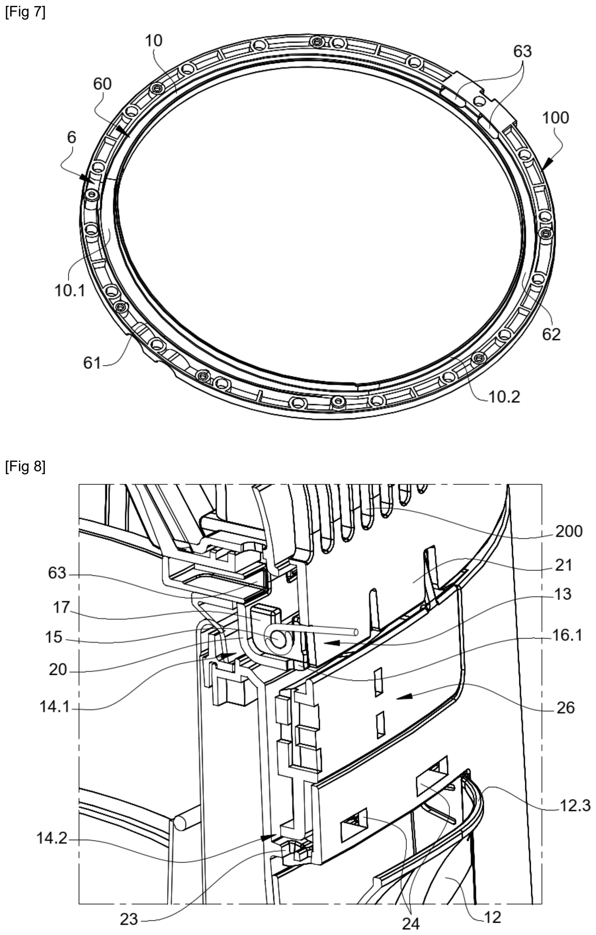

Comme montré sur la figure 7, le canal de collecte 60 peut être monobloc, c'est-à-dire être réalisé en une seule pièce, et comporte au moins un orifice d'évacuation 63 prévu dans une partie arrière AR du couvercle 4, la portion de guidage 62 étant configurée pour guider des condensats collectés par le canal de collecte 60 jusqu'à l'au moins un orifice d'évacuation 63. Avantageusement, l'au moins un orifice d'évacuation 63 est configuré pour être le point le plus bas du canal de collecte 60 lorsque le couvercle 4 est dans la position d'ouverture.

Selon le premier mode de réalisation de l'invention, la portion de guidage 62 du canal de collecte 60 est contiguë à la portion de collecte 61, c'est-à-dire s'étend dans le prolongement de la portion de collecte 61. Avantageusement, la portion de guidage 62 est située à une altitude inférieure à celle de la portion de collecte 61 lorsque le couvercle 4 occupe la position de fermeture, de sorte à autoriser un écoulement gravitaire des condensats depuis la portion de collecte 61 jusqu'à la portion de guidage 62 lorsque le couvercle 4 est dans la position de fermeture et que le boîtier 2 repose sur une surface horizontale.

Selon le premier mode de réalisation de l'invention, la portion de guidage 62 s'étend selon un plan d'extension qui est sensiblement horizontal lorsque le boîtier 2 repose sur une surface horizontale et que le couvercle 4 est dans la position de fermeture. Alternativement, la portion de guidage 62 pourrait s'étendre selon un plan d'extension qui est incliné en direction de la partie arrière AR du boîtier 2 lorsque le boîtier 2 repose sur une surface horizontale et que le couvercle 4 est dans la position de fermeture. Une telle configuration permet d'éviter l'accumulation des condensats à l'avant de la portion de guidage 62.

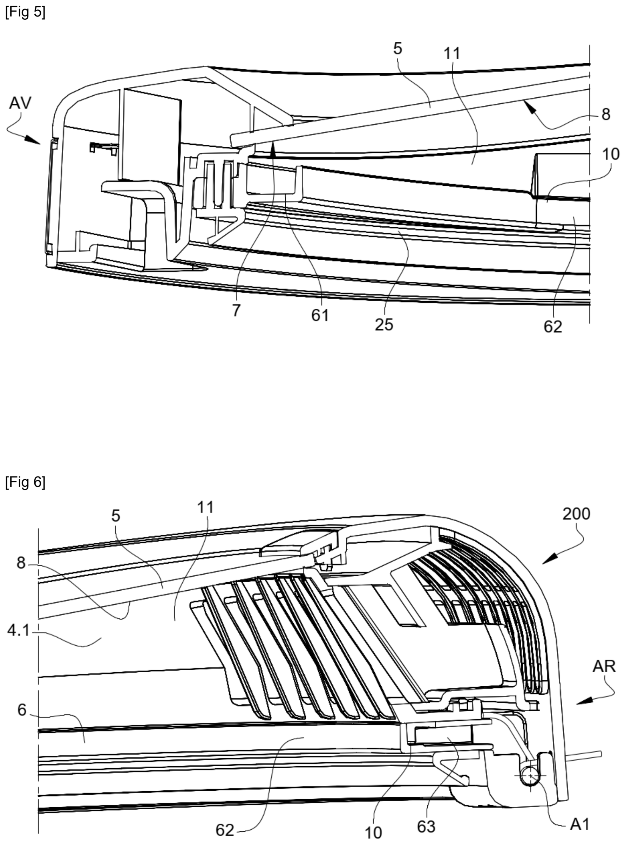

Comme visible plus spécifiquement sur les figures 5 et 6, la portion de guidage 62 forme un conduit de guidage, c'est-à-dire un canal de guidage à section fermée. Une telle configuration de l'invention permet d'éviter que les condensats présents dans le canal de collecte 60 ne s'accumulent et ne débordent de la portion de guidage 62 et ne retombent dans le bain de cuisson lorsque le couvercle 4 est déplacé vers la position d'ouverture après un cycle de cuisson par exemple. En effet, lors de l'ouverture du couvercle 4, les condensats vont, sous l'effet de la gravité, être convoyés simultanément vers le point le plus bas du canal de collecte 60, en l'occurrence la portion de guidage 62, ce qui pourrait conduire à un débordement localisé des condensats dans le cas où la portion de guidage 62 présente une ouverture supérieure par exemple.

Selon le premier mode de réalisation de l'invention représenté sur les figures 1 à 11, le couvercle 4 comporte un corps de couvercle 11 et une pièce de collecte 100 (voir figure 7) qui est fixée au corps de couvercle 11 et qui comprend un canal principal 10 à section ouverte comportant une première partie de canal 10.1 formant la portion de collecte 61 et une deuxième partie de canal 10.2 formant en partie la portion de guidage 62. Le corps de couvercle 11 est plus particulièrement configuré pour recouvrir et obturer la deuxième partie de canal 10.2 de telle sorte que le corps de couvercle 11 et la deuxième partie de canal 10.2 forment la portion de guidage 62, et plus particulièrement un canal de guidage à section fermée.

L'appareil de cuisson électrique 1 comporte en outre un bac de collecte de condensat 12, et un circuit d'acheminement de condensat 13 relié fluidiquement à l'au moins un orifice d'évacuation 63 et configuré pour acheminer des condensats provenant de l'au moins un orifice d'évacuation 63 jusqu'au bac de collecte de condensat 12. De façon avantageuse, et comme représenté sur les figures 8 à 11, le circuit d'acheminement de condensat 13 comporte une chambre de collecte 14.1 logeant au moins en partie l'arbre de pivotement 15 appartenant à la liaison pivot du couvercle 4, et en particulier un arbre de pivotement 15 appartenant à ladite liaison pivot, et une chambre intermédiaire 14.2 qui est située en dessous de la chambre de collecte 14.1 et qui est reliée fluidiquement à la chambre de collecte 14.1.

Selon le premier mode de réalisation de l'invention, la chambre de collecte 14.1 est prévue dans le couvercle 4, c'est-à-dire qu'elle est solidaire en pivotement avec le couvercle 4, et comporte plusieurs orifices de drainage 16 configurés pour s'étendre sensiblement à l'aplomb de la chambre intermédiaire 14.2 et configurés pour autoriser un écoulement des condensats depuis la chambre de collecte 14.1 vers la chambre intermédiaire 14.2. Cependant, selon une variante de réalisation de l'invention, la chambre de collecte 14.1 pourrait comporter un unique orifice de drainage 16.

Selon le premier mode de réalisation de l'invention, chaque orifice de drainage 16 est prévu sur une paroi inférieure 22 de la chambre de collecte 14.1, et est configuré pour autoriser un écoulement gravitaire des condensats depuis la chambre de collecte 14.1 jusqu'au circuit d'acheminement de condensat 13. Avantageusement, chaque orifice de drainage 16 est configuré pour s'étendre selon un plan sensiblement horizontal lorsque le couvercle 4 est dans la position de fermeture.

La chambre de collecte 14.1 comporte plus particulièrement deux parois de support 17 configurées pour supporter une partie centrale de l'arbre de pivotement 15, ainsi que deux parois latérales 18 configurées pour supporter respectivement des portions d'extrémité de l'arbre de pivotement 15. Selon le premier mode de réalisation de l'invention, la chambre de collecte comporte trois compartiments internes 19 qui sont séparés les uns des autres par les deux parois de support 17 et qui comprennent chacun au moins un orifice de drainage 16. Une telle configuration de l'invention permet d'éviter l'accumulation de condensat dans les compartiments internes 19.

La chambre de collecte 14.1 comporte en outre une première paroi de chambre 20 et une deuxième paroi de chambre 21 situées en regard l'une de l'autre et de part et d'autre de l'axe de pivotement du couvercle 4, la deuxième paroi de chambre 21 étant plus éloignée d'un axe central du couvercle 4 que la première paroi de chambre 20. Chacun des compartiments internes 19 est délimité en partie par la première paroi de chambre 20, la deuxième paroi de chambre 21, et l'une des parois de support 17.

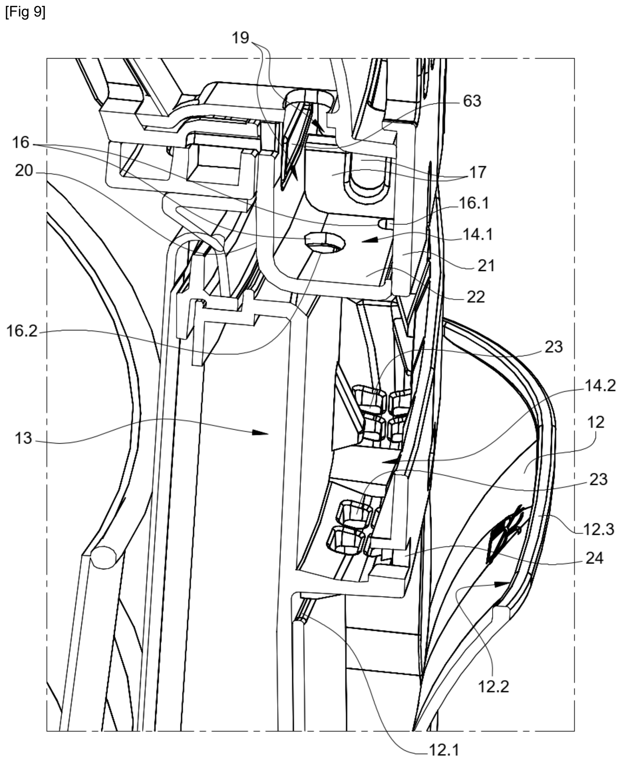

Selon le premier mode de réalisation de l'invention, les orifices de drainage 16 comportent au moins un orifice de drainage distal 16.1 (voir figures 8 et 9) qui est adjacent à la deuxième paroi de chambre 21 de la chambre de collecte 14.1. Une telle configuration de l'invention permet d'éviter la création de volume mort dans la chambre de collecte 14.1, et en particuliers d'éviter la création de volumes morts dans chacun des compartiments internes 19, et ainsi de vidanger l'intégralité des condensats présents dans la chambre de collecte 14.1 lorsque le couvercle 4 est dans la position d'ouverture. De façon avantageuse, l'appareil de cuisson électrique 1 est configuré de telle sorte que, lors du déplacement du couvercle 4 dans la position d'ouverture, la deuxième paroi de chambre 21 de la chambre de collecte 14.1 est configurée pour guider au moins une partie des condensats collectés par la chambre de collecte 14.1 vers l'orifice de drainage distal 16.1.

Selon le premier mode de réalisation de l'invention, les orifices de drainage 16 comportent par ailleurs au moins un orifice de drainage proximal 16.2 prévu du côté, et par exemple à proximité immédiate, de la première paroi de chambre 20 de la chambre de collecte 14.1. Une telle configuration de l'invention permet d'éviter l'accumulation de condensat dans la chambre de collecte 14.1 lorsque le couvercle 4 est dans la position de fermeture en plaçant l'au moins un orifice de drainage proximal 16.2 dans une zone adjacente à l'orifice d'évacuation 63. Plus particulièrement, chaque compartiment interne 19 comporte un orifice de drainage proximal 16.2 afin de maximiser le drainage des condensats.

Chaque orifice de drainage distal 16.1 et chaque orifice de drainage proximal 16.2 sont prévus respectivement de part et d'autre d'un plan vertical contenant l'arbre de pivotement 15 (voir figure 8). En outre, les orifices de drainage distaux 16.1 sont configurés pour s'étendre à une élévation inférieure à l'élévation des orifices de drainage proximaux 16.2 lorsque le couvercle 4 est dans la position d'ouverture.

Selon le premier mode de réalisation de l'invention, la chambre intermédiaire 14.2 est prévue dans une partie arrière du boîtier 2 et comporte plusieurs orifices de sortie 23 configurés pour s'étendre sensiblement à l'aplomb du bac de collecte de condensat 12 et configurés pour autoriser un écoulement des condensats depuis la chambre intermédiaire 14.2 vers le bac de collecte de condensat 12. De façon avantageuse, chaque orifice de sortie 23 est configuré pour être orienté sensiblement verticalement lorsque le boîtier 2 repose sur une surface horizontale. Cependant, selon une variante de réalisation de l'invention, la chambre intermédiaire 14.2 pourrait comporter un unique orifice de sortie 23.

Selon le premier mode de réalisation de l'invention, le couvercle 4 comporte un support de charnière 26 qui est monté dans la chambre intermédiaire 14.2 et qui délimite en partie le circuit d'acheminement de condensat 13. Le support de charnière 26 comporte en partie la liaison pivot configurée pour autoriser le pivotement du couvercle 4 entre la position de fermeture et la position d'ouverture. Avantageusement, le support de charnière 26 est configuré pour être amovible par rapport au boîtier 2, de manière à permettre un démontage du couvercle 4 par rapport au boîtier 2.

Le support de charnière 26 peut par exemple comporter une partie de fixation qui est configurée pour être montée de manière amovible dans la chambre intermédiaire 14.2 et qui est équipée d'au moins un doigt de fixation, et la chambre intermédiaire 14.2 peut par exemple comporter au moins un orifice de sortie latéral 24 débouchant dans une surface externe du boîtier 2 et dans lequel est apte à être reçu, au moins en partie, l'au moins un doigt de fixation.

Comme visible sur la figure 9, le bac de collecte de condensat 12 comporte un bord périphérique supérieur 12.1 qui délimite une ouverture supérieure 12.2 ; et le ou chaque orifice de sortie 23 de la chambre intermédiaire 14.2 est configuré pour être situé en regard de l'ouverture supérieure 12.2 du bac de collecte de condensat 12. En d'autres termes, Le ou chaque orifice de sortie 23 est configuré pour s'étendre à l'aplomb de l'ouverture supérieure 12.2 du bac de collecte de condensat 12.

Selon le premier mode de réalisation de l'invention, le bord périphérique supérieur 12.1 du bac de collecte de condensat 12 comporte une portion de bord 12.3 configurée pour être en saillie par rapport à une paroi périphérique du boîtier 2 lorsque le bac de collecte de condensat 12 est dans une configuration d'utilisation, c'est-à-dire lorsque le bac de collecte de condensat 12 est monté sur le boîtier 2. Une telle configuration du bac de collecte de condensat 12 permet avantageusement de collecter d'éventuels condensats s'écoulant depuis l'un des orifices de sortie latéraux 24 de la chambre intermédiaire 14.2, ou depuis un orifice d'évacuation de vapeur 200 prévu sur le couvercle.

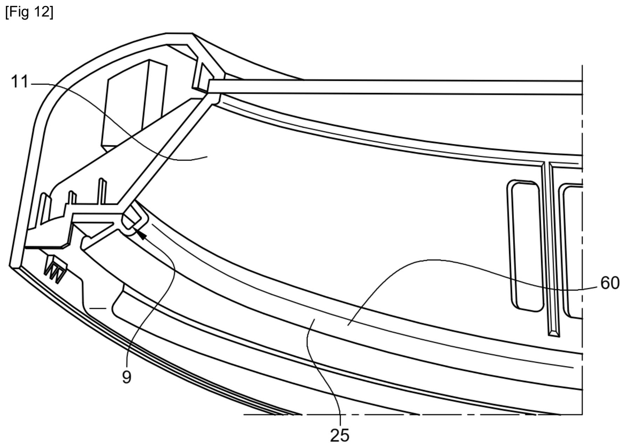

La figure 12 représente un couvercle 4 d'un appareil de cuisson électrique 1 selon un deuxième mode de réalisation de l'invention, lequel diffère du première mode de réalisation essentiellement en ce que l'appareil de cuisson électrique 1 comporte un élément d'étanchéité 25, tel qu'un joint d'étanchéité par exemple, configuré pour s'étendre au moins en partie entre le couvercle 4 et le boîtier 2 lorsque le couvercle 4 est dans la position de fermeture, l'élément d'étanchéité 25 délimitant au moins en partie le canal de collecte 60. Une telle configuration de l'invention permet avantageusement de cumuler deux fonctions en une seule pièce, l'élément d'étanchéité 25 permettant d'assurer l'étanchéité de la chambre de cuisson au niveau de l'interface couvercle 4 / boîtier 2 lorsque le couvercle 4 est dans la position de fermeture, et de collecter et de guider les condensats depuis la portion de collecte 61 jusqu'à l'au moins orifice d'évacuation 63.

Bien entendu, la présente invention n'est nullement limitée aux modes de réalisation décrits et illustrés qui n'ont été donnés qu'à titre d'exemples. Des modifications restent possibles, notamment du point de vue de la constitution des divers éléments ou par substitution d'équivalents techniques, sans sortir pour autant du domaine de protection de l'invention.

## Revendications

1. Appareil de cuisson électrique (1) à bain de cuisson configuré pour la cuisson d'aliment et comportant :
- un boîtier (2) comportant une cuve de cuisson (3) configurée pour recevoir un bain de cuisson ;
- un couvercle (4) comprenant une paroi inférieure (4.1), le couvercle (4) étant relié au boîtier (2) par un axe définissant une liaison pivot, la liaison pivot étant configurée de telle sorte que le couvercle (4) peut se déplacer de manière pivotante entre une position d'ouverture dans laquelle le couvercle (4) autorise un accès à la cuve de cuisson (3), et une position de fermeture dans laquelle le couvercle (4) empêche l'accès à la cuve de cuisson (3) et dans laquelle la paroi inférieure (4.1) du couvercle (4) délimite, avec la cuve de cuisson (3), une chambre de cuisson ;
- un dispositif de chauffage (50) configuré pour chauffer le bain de cuisson ;
- un dispositif de collecte (6) disposé au moins en partie dans la chambre de cuisson et configuré pour collecter, lorsque le couvercle (4) est dans la position de fermeture, des condensats formés sur la paroi inférieure (4.1) du couvercle (4) lors de la cuisson des aliments, le dispositif de collecte (6) comprenant au moins un orifice d'évacuation (63) ;
- un bac de collecte de condensat (12) ; et
- un circuit d'acheminement de condensat (13) configuré pour acheminer les condensats depuis l'au moins un orifice d'évacuation (63) jusqu'au bac de collecte de condensat (12), le circuit d'acheminement de condensat (13) comportant une chambre de collecte (14.1) reliée fluidiquement à l'au moins un orifice d'évacuation (63) et configurée pour collecter les condensats provenant de l'au moins un orifice d'évacuation (63), ladite chambre de collecte (14.1) logeant au moins en partie la liaison pivot, et comportant au moins un orifice de drainage (16) ;
l'appareil de cuisson électrique (1) étant configuré de telle sorte que, lorsque le couvercle (4) est déplacé dans la position d'ouverture, les condensats collectés par le dispositif de collecte (6) s'écoulent par gravité jusqu'à la chambre de collecte (14.1) via l'au moins un orifice d'évacuation (63).

2. Appareil de cuisson électrique (1) selon la revendication 1, dans lequel la chambre de collecte (14.1) est prévue dans le couvercle (4).

3. Appareil de cuisson électrique (1) selon la revendication 1 ou la revendication 2, dans lequel la chambre de collecte (14.1) est configurée pour loger au moins en partie un arbre de pivotement (15) appartenant à la liaison pivot.

4. Appareil de cuisson électrique (1) selon la revendication 3, dans lequel la chambre de collecte (14.1) comporte au moins deux parois de support (17) configurées pour supporter en partie l'arbre de pivotement (15) appartenant à la liaison pivot.

5. Appareil de cuisson électrique (1) selon la revendication 4, dans lequel la chambre de collecte (14.1) comporte une pluralité de compartiments internes (19) qui sont séparés les uns des autres et qui comprennent chacun au moins un orifice de drainage (16).

6. Appareil de cuisson électrique (1) selon l'une quelconque des revendications 1 à 5, dans lequel le circuit d'acheminement de condensat (13) comporte également une chambre intermédiaire (12.2), et l'au moins un orifice de drainage (16) est prévu sur une paroi inférieure (22) de la chambre de collecte (14.1) et est configuré pour autoriser un écoulement gravitaire des condensats depuis la chambre de collecte (14.1) jusqu'à la chambre intermédiaire (14.2).

7. Appareil de cuisson électrique (1) selon la revendication 6, dans lequel la chambre intermédiaire (14.2) comprend au moins un orifice de sortie (23) configuré pour autoriser un écoulement des condensats depuis la chambre intermédiaire (14.2) jusque dans le bac de collecte de condensat (12).

8. Appareil de cuisson électrique (1) selon la revendication 7, dans lequel le bac de collecte de condensat (12) comporte un bord périphérique supérieur (12.1) délimitant une ouverture supérieure (12.2), l'au moins un orifice de sortie (23) de la chambre intermédiaire (14.2) étant configuré pour être situé en regard de l'ouverture supérieure (12.2) du bac de collecte de condensat (12).

9. Appareil de cuisson électrique (1) selon la revendication 8, dans lequel le bord périphérique supérieur (12.1) du bac de collecte de condensat (12) comporte une portion de bord (12.3) configurée pour être en saillie par rapport à une paroi périphérique du boîtier (2) lorsque le bac de collecte de condensat (12) est dans une configuration d'utilisation.

10. Appareil de cuisson électrique (1) selon l'une quelconque des revendications 1 à 9, dans lequel la chambre de collecte (14.1) comporte une première paroi de chambre (20) et une deuxième paroi de chambre (21) situées en regard l'une de l'autre et de part et d'autre de l'axe de pivotement du couvercle (4), la deuxième paroi de chambre (21) étant plus éloignée d'un axe central du couvercle (4) que la première paroi de chambre (20), l'au moins un orifice de drainage (16) comportant au moins un orifice de drainage distal (16.1) qui est adjacent à la deuxième paroi de chambre (21).

11. Appareil de cuisson électrique (1) selon la revendication 10, dans lequel l'au moins un orifice de drainage (16) comporte au moins un orifice de drainage proximal (16.2) situé à proximité de la première paroi de chambre (20).

12. Appareil de cuisson électrique (1) selon l'une quelconque des revendications 1 à 11, dans lequel le bac de collecte de condensat (12) est configuré pour s'étendre sensiblement à l'aplomb de l'axe de pivotement du couvercle (4).

13. Appareil de cuisson électrique (1) selon l'une quelconque des revendications 1 à 12, dans lequel, lorsque le couvercle (4) est dans la position d'ouverture et que le boîtier (2) repose sur une surface horizontale, le couvercle (4) est incliné selon un angle strictement inférieur à 90° par rapport à un axe vertical.
